# EUROPEAN PATENT APPLICATION

(11) **EP 4 495 806 A1**
(43) Date of publication of application: **22.01.2025**
(21) Application number: 24188906.2
(22) Date of filing: 16.07.2024
(51) Int. Cl.: G06F 16/901, G06F 16/958

(54) **ACCESSIBILITY ANALYSIS OF WEB CONTENT UNDERGOING MUTATIONS**

(30) Priority: 19.07.2023 US 202363514368 P
(71) Applicant: Evinced Ltd., 6701508 Tel Aviv (IL)
(72) Inventor: Bloom, Guy, 3780800 Binyamina Givat Ada (IL); Kaveh, Shalev, 7175892 Modiin-Maccabim-Reut (IL); Ichilov, David, 4246389 Netanya (IL); Goren, Daniel, 7696500 Kfar Bilu (IL)
(74) Representative: Beck Greener LLP

(57) **Abstract**

A method for analyzing Web content includes constructing an accessibility-related values graph for Web content including multiple User Interface (UI) components and associated attributes. The accessibility-related values graph includes (i) values derived from at least some of the attributes of the UI components, and (ii) interrelations defined between the values. On-going validation of the Web content is performed, including, in response to detecting a change occurring in the Web content (i) updating the accessibility-related values graph to reflect the change, (ii) identifying a subset of the values of the accessibility-related values graph that have been affected by the change, and (iii) executing, on the subset of values affected by the change, one or more validity tests that validate compliance of the Web content with a defined accessibility specification.

## Description

### FIELD OF THE INVENTION

The present invention relates generally to accessibility of Web content, and particularly to methods and systems for accessibility analysis of Web content that undergoes mutations.

### BACKGROUND OF THE INVENTION

Content displayed to users is often required to be accessible to people with disabilities. For this purpose, Web browsers and applications sometimes interface with Assistive Technologies (AT), such as screen readers or magnification software. The World Wide Web Consortium (W3C) has published a suite of standards that specify a framework of accessible Web content. Relevant standards include, for example, W3C Recommendations "Web Content Accessibility Guidelines (WCAG) 2.2," October 5, 2023, "Accessible Rich Internet Applications (WAI-ARIA) 1.2," June 6, 2023, and "ARIA in HTML," May 7, 2024, which are incorporated herein by reference.

### SUMMARY OF THE INVENTION

An embodiment of the present invention that is described herein provides a method for analyzing Web content. The method includes constructing an accessibility-related values graph for Web content including multiple User Interface (UI) components and associated attributes. The accessibility-related values graph includes (i) values derived from at least some of the attributes of the UI components, and (ii) interrelations defined between the values. On-going validation of the Web content is performed, including, in response to detecting a change occurring in the Web content (i) updating the accessibility-related values graph to reflect the change, (ii) identifying a subset of the values of the accessibility-related values graph that have been affected by the change, and (iii) executing, on the subset of values affected by the change, one or more validity tests that validate compliance of the Web content with a defined accessibility specification.

In some embodiments, the method further includes accumulating incremental updates of the accessibility-related values graph in response to changes occurring in the Web content over time, to produce an accessibility timeline data structure. In an example embodiment, producing the accessibility timeline data structure is performed by a first processor, the method further includes exporting the accessibility timeline data structure from the first processor to a second processor, and at least some of the validity tests are executed on the accessibility timeline data structure by the second processor.

In a disclosed embodiment, the Web content is displayed to a user by a software program, and at least part of the on-going validation is performed by an extension of the software program. In an embodiment, at least part of the on-going validation is performed by executable code inserted to the Web content.

In some embodiments, identifying the values affected by the change includes (i) marking one or more of the values of the accessibility-related values graph as affected by the change, (ii) progressively traversing at least some of the values of the accessibility-related values graph, starting from the one or more marked values, and (iii) identifying, based on the interrelations defined between the values, additional values among the traversed values affected by the change.

In an embodiment, constructing and updating the accessibility-related values graph are performed by accessing one or more object models representing the Web content.

There is additionally provided, in accordance with an embodiment of the present invention, a system for analyzing Web content. The system includes a memory and one or more processors. The memory is configured to store the Web content. The one or more processors are configured to construct an accessibility-related values graph for Web content including multiple User Interface (UI) components and associated attributes. The accessibility-related values graph includes (i) values derived from at least some of the attributes of the UI components, and (ii) interrelations defined between the values. The one or more processors are configured to perform on-going validation of the Web content, including, in response to detecting a change occurring in the Web content (i) updating the accessibility-related values graph to reflect the change, (ii) identifying a subset of the values of the accessibility-related values graph that have been affected by the change, and (iii) executing, on the subset of values affected by the change, one or more validity tests that validate compliance of the Web content with a defined accessibility specification.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a system for validating accessibility of Web pages, in accordance with an embodiment of the present invention;
Fig. 2 is a diagram that schematically illustrates a Document Object Model (DOM) of a Web page, and EvDOM and EvValues data structures derived from the DOM, in accordance with an embodiment of the present invention;
Fig. 3 is a diagram that schematically illustrates the use of primitive and derived EvValues, in accordance with an embodiment of the present invention;
Fig. 4 is a diagram that schematically illustrates updating of an EvNode in response to a sequence of mutations, in accordance with an embodiment of the present invention; and
Fig. 5 is a flow chart that schematically illustrates a method for validating accessibility of a Web page, in accordance with an embodiment of the present invention.

### DETAILED DESCRIPTION OF EMBODIMENTS

### OVERVIEW

Embodiments of the present invention that are described herein provide improved methods and systems for validating accessibility compliance and identifying accessibility violations in Web content. In particular, the disclosed techniques carry out an on-going validation process that tracks changes ("mutations") occurring in a Web page over time, and re-validate page components that are affected by the changes.

For the sake of clarity, the embodiments described herein refer mainly to an implementation involving a Web browser that displays Web pages to a user. An accessibility client (referred to below simply as "client" for brevity) is implemented as an extension of the browser, for carrying out the disclosed validation processes. This implementation, however, is described purely by way of example. The disclosed techniques can be used with any other suitable types of Web content, e.g., Internet Applications, and in any other suitable software environment, e.g., automation.

In some embodiments, the accessibility client begins tracking a certain page by extracting relevant information from one or more object models representing the page. For simplicity, the description that follows will refer mainly to the Document Object Model (DOM) of the page. Another example model that can be used is the Cascading Style Sheets Object Model (CSSOM) of the page.

The client typically creates a working copy of at least part of the DOM, referred to herein as "EvDOM". The EvDOM is a tree data structure that specifies User Interface (UI) components of the page, their hierarchy and attributes. From the EvDOM, the client derives an "accessibility-related values graph" referred to herein as "EvValues graph". The EvValues graph comprises (i) values ("EvValues") that are relevant to accessibility compliance and are derived from the attributes of the page's UI components, and (ii) interrelations between the values. The client can then validate the accessibility compliance of the page by executing validity tests on the EvValues of the EvValues graph.

In some embodiments, the client updates the EvValues graph continuously along the lifecycle of the page, so as to reflect changes (referred to as "mutations") occurring in the page. A mutation may occur, for example, due to an interaction of the user with the page, due to a change in the appearance or content of the page independently of user action, or for any other reason.

Upon detecting a mutation, the client updates the EvValues graph to reflect the new state of the page. The client then repeats the validity tests to validate the updated page. Instead of validating the entire page, however, the client typically identifies the subset of the EvValues affected by the mutation, and applies the validity tests only to those EvValues. Since a given mutation typically affects only a small percentage of the page's attributes, this technique considerably reduces the computational power, and therefore the time, needed for re-validating the page.

In some embodiments, as part of the above-described tracking process, the client constructs a data structure referred to as a "timeline". The timeline comprises a compact representation of how the EvValues graph evolves over time due to mutations. The timeline is compact because it does not contain a complete standalone copy of the EvValues graph following each mutation. Instead, the client typically records only the incremental changes made to the EvValues graph following the mutations.

The timeline data structure is a powerful tool for analyzing accessibility aspects of the page, and can be used in real time and/or offline. For example, the timeline can be replayed to analyze the accessibility related information of the page at any desired point in time. Moreover, the timeline can be exported to a different computer for analysis. This feature enables analyzing the page using tools that are beyond the computational power of the processor hosting the accessibility client.

In such embodiments, the client is able to collect rich and detailed accessibility-related information along the lifecycle of the page with modest computational requirements. Analyzing the information, on the other hand, can be performed remotely using strong analysis tools. The offline analysis may be independent of the type of browser or application used to display the page and collect the information.

The accessibility validation techniques described herein can be used in various ways. For example, multiple accessibility clients can be installed on multiple computers of multiple users and used for "crowd-sourced" validation of Web pages during real-life usage. In another use-case, the disclosed accessibility client may be used by a (human or computerized) tester in a dedicated test session, e.g., as part of Web-site or application development.

### SYSTEM DESCRIPTION

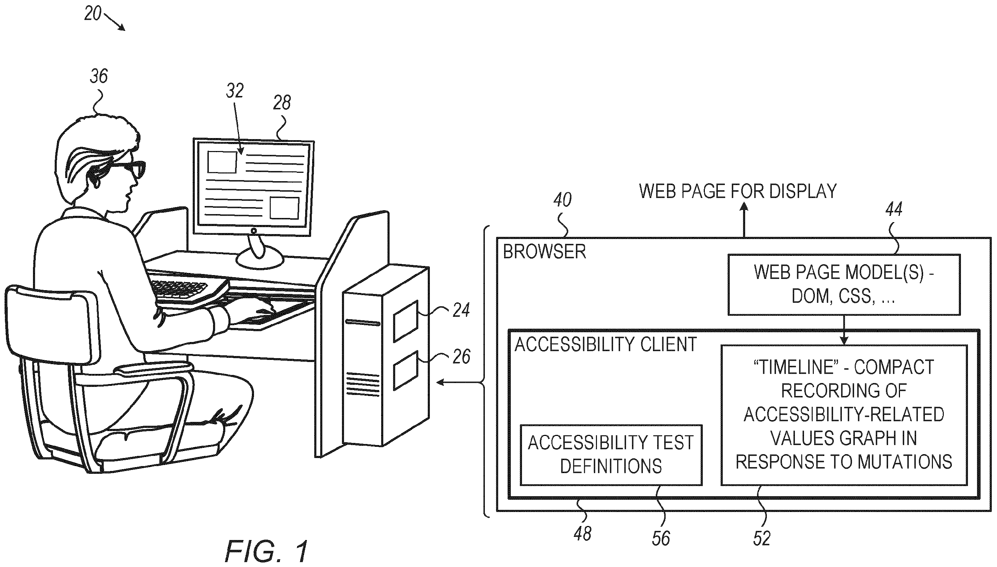

Fig. 1 is a block diagram that schematically illustrates a system 20 for validating accessibility of Web content, e.g., Web pages, in accordance with an embodiment of the present invention. System 20 comprises a processor 24, a memory 26 and a display 28. Among other tasks, processor 24 displays Web pages 32 to a user 36 on display 28. The user may view the displayed pages and interact with the pages in various ways, e.g., scrolling, zooming, pushing buttons, etc. Memory 26 is used for storing Web pages 32 and/or any other suitable information.

In the present example, processor 24 runs a Web browser 40, e.g., Google Chrome or Mozilla Firefox. To render and display a given Web page, browser 40 holds one or more object models 44 of the page, e.g., a DOM and/or a CSSOM. Browser 40 further runs an accessibility client 48 that carries out at least some of the disclosed accessibility validation techniques. Client 48 is typically implemented as an extension of browser 40.

In some embodiments, client 48 creates and maintains a data structure referred to as a "timeline" 52 for each Web page being validated. In brief, timeline 52 comprises a compact representation that records how accessibility-related values derived from the page's DOM evolve over time due to mutations. The structure and usage of timeline 52 are explained in detail further below.

Client 48 holds a set of accessibility test definitions 56. The client uses test definitions 56 to validate the page, by applying the tests to relevant portions of timeline 52. Additionally, or alternatively, processor 24 may export timeline 52 to another processor for analysis.

Processor 24 typically stores the various data structures being used, e.g., model(s) 44 and timeline 52, as well as test definitions 56, in memory 26. For simplicity, the description herein refers to a single page being validated using a single timeline. In a real-life implementation, client 48 may validate multiple different pages using multiple respective timelines 52.

The configuration of system 20 and its various components, as shown in Fig. 1, is an example configuration that is chosen purely for the sake of conceptual clarity. In alternative embodiments, any other suitable configuration can be used. For example, in some configurations (e.g., in automation tests) the Web content (e.g., Web pages) being validated is not necessarily displayed to a user. Elements that are not necessary for understanding the principles of the present invention have been omitted from the figures for clarity.

The various elements of system 20 may be implemented in hardware, e.g., in one or more Application-Specific Integrated Circuits (ASICs) or FPGAs, in software, or using a combination of hardware and software elements. Typically, processor 24 comprises a general-purpose computer, which is programmed in software to carry out the functions described herein. The software may be downloaded to the computer in electronic form, over a network, for example, or it may, alternatively or additionally, be provided and/or stored on non-transitory tangible media, such as magnetic, optical, or electronic memory.

### DATA STRUCTURES USED IN ACCESSIBILITY VALIDATION

In some embodiments, accessibility client 48, which runs as part of browser 40 on processor 24, creates and maintains the following data structures for accessibility validation of a given Web page:
▪ "EvDOM" - A working copy of at least part of the DOM of the page.
▪ "Accessibility-related values graph" or "EvValues graph" - A graph comprising (i) values ("EvValues") that are relevant to accessibility compliance and are derived from the attributes of the page's UI components, and (ii) interrelations between the EvValues.
▪ "Timeline" - A compact representation of how the EvValues graph evolves over time due to mutations.

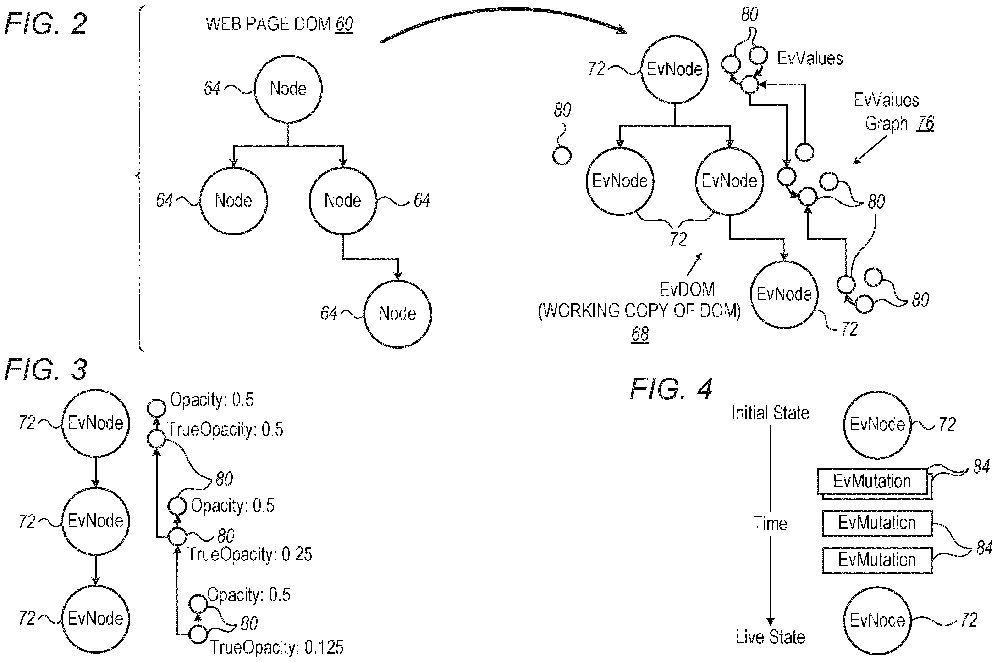

Fig. 2 is a diagram that schematically illustrates a Document Object Model (DOM) of a Web page, and EvDOM and EvValues data structures derived from the DOM, in accordance with an embodiment of the present invention.

The left-hand side of Fig. 2 shows a simple example of a DOM 60. DOM 60 is a tree data structure comprising multiple DOM nodes 64. The parent-child hierarchy of DOM nodes 64 is illustrated using arrows. A given DOM node 64 represents a certain element in DOM 60 (which in turn represents a certain UI component of the page) and comprises one or more attributes associated with that DOM element. For example, a <button> element may comprise attributes relating to its actions (onClick, onKeyDown), its style (style="display: none"), its state (aria-expanded, disabled) and/or any other suitable attributes.

The right-hand side of Fig. 2 shows an example of an EvDOM 68 and an EvValues graph 76, which are derived by accessibility client 48 from DOM 60. EvDOM 68 is a tree data structure comprising multiple nodes 72 referred to as EvNodes. The parent-child hierarchy of EvNodes 72 is illustrated using arrows. A given EvNode 72 of EvDOM 68 typically comprises a copy of a corresponding DOM node 64 of DOM 60.

In some embodiments, EvDOM 68 is identical to DOM 60. In other embodiments, EvDOM 68 is diluted, i.e., contains only part of the information of DOM 64 (e.g., not all nodes and/or not all attributes of the DOM) . Diluting EvDOM 68 reduces memory requirements and enables client 48 to retain and process only information relevant to accessibility validation.

EvValues graph 76 is a graph data structure, not necessarily a tree. EvValues graph 76 comprises multiple nodes 80 referred to as EvValues. Each EvValue 80 is associated with a certain EvNode 72 (a given EvNode 72 may be associated with one or multiple EvValues 80). Each EvValue 80 has a value that is taken from, or derived from, one or more attributes of EvDOM 68. An EvValue that is equal to attribute of DOM 60 (i.e., taken as-is from the DOM) is referred to as a primitive EvValue. An EvValue that is derived by calculation from one or more other EvValues is referred to as a derived EvValue. A derived EvValue may be based on one or more primitive and/or derived EvValues.

Fig. 3 is a diagram that demonstrates the use of primitive and derived EvValues, in accordance with an embodiment of the present invention. In this example, each EvNode 72 has two EvValues 80:
▪ An "Opacity" value - A primitive EvValue that specifies the opacity of the UI component, regardless of other UI components.
▪ A "TrueOpacity" value - A derived EvValue that specifies the actual opacity of the UI component as it is displayed on display 28. The TrueOpacity value of an EvNode depends not only on the Opacity value of that EvNode, but also on the TrueOpacity of its parent EvNode. Typically, the TrueOpacity value is the value that is relevant to accessibility validation, since this is the actual opacity seen by user 36.

During its lifecycle, the Web page (and therefore DOM 60) undergoes changes that affect its appearance and/or content. These changes are referred to herein as "mutations". Some mutations may be caused by user interactions with the UI components of the page. Other mutations may be independent of the user, e.g., mutations caused by updating of information in the page. As can be appreciated, a page that complied with a certain accessibility requirement before a mutation does not necessarily remain compliant after the mutation.

In some embodiments, accessibility client 48 detects mutations occurring in the page, updates the states of the relevant EvNodes and EvValues to reflect the state of the page following the mutation, and re-validates the relevant EvValues to verify whether they remain accessibility-compliant.

Fig. 4 is a diagram that schematically illustrates updating of an EvNode 72 in response to a sequence of mutations 84, in accordance with an embodiment of the present invention. The top of the figure shows an initial state of the EvNode, before the sequence of mutations. The bottom of the figure shows the updated ("live") state of the EvNode following the sequence of mutations 84.

In some embodiments, while tracking the mutations occurring in the page, client 48 gradually constructs timeline 52 (shown in Fig. 1). Timeline 52 comprises a compact representation of how EvValues graph 76 evolves over time due to mutations 84. Typically, timeline 52 does not contain a complete standalone copy of EvValues graph 76 following each mutation. Rather, in response to a mutation or a group of mutations, client 48 typically records only the incremental updates made to the EvValues graph (relative to the version of the EvValues graph before the mutation or a group of mutations).

The data structures seen in Figs. 2-4 are example data structures illustrated for the sake of conceptual clarity. In alternative embodiments, any other suitable data structures can be used. For example, in some embodiments timeline 52 also comprises incremental updates made to EvDOM 68 in response to the mutations. This feature may be advantageous in some use-cases, but is in no way mandatory.

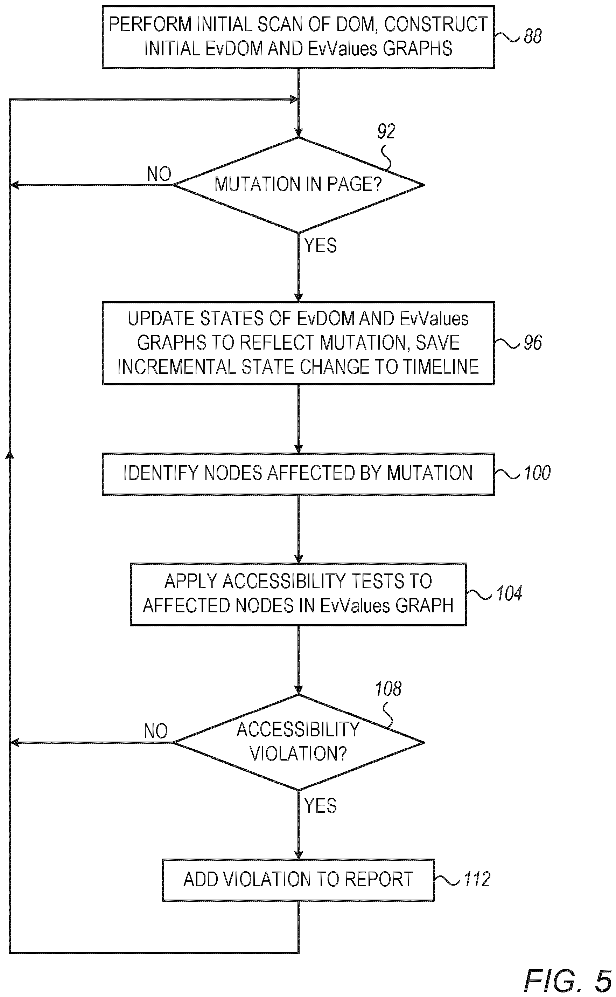

Fig. 5 is a flow chart that schematically illustrates a method for validating accessibility of a Web page, in accordance with an embodiment of the present invention. The method is initiated upon a request to start validating a certain Web page.

The method begins with accessibility client 48 performing an initial scan of the page, at an initial scanning operation 88. At this stage, client 48 creates an initial version of EvDOM 68 and EvValues graph 76. In an example embodiment, client 48 may be configured to perform the initial scan in a "compact mode", a "verbose mode" or a "custom mode". These modes are explained in detail further below.

Once the initial versions of the data structures are in place, client 48 typically runs an initial check for accessibility violations. If a violation is found, client 48 adds the detected violation to a report that is accumulated during the validation process.

Client 48 begins to monitor the page and check for mutations, at a mutation detection operation 92. In some embodiments, client 48 detects mutations by monitoring DOM 60. In other embodiments, client 48 may monitor additional data structures or events that may indicate mutations that are not reflected in the DOM. For example, "hovering" over a UI component may change the appearance of the page in a manner that affects accessibility, but this event cannot be detected by monitoring the DOM. To detect such events and consider them as mutations, client 48 may parse the CSS rules and formulate suitable event that, when occurring, will be interpreted as mutations.

If a mutation is detected, client 48 updates the states of EvDOM 68 and EvValues graph 76 to reflect the mutation, at a data structure updating operation 96. At this stage, client 48 also saves the incremental updates made to EvValues graph 76 (and optionally the incremental updates made to EvDOM 68) to timeline data structure 52.

At an affected node identification operation 100, client 48 identifies the subset of EvValues 80 (in EvValues graph 76) that have been affected by the mutation. In some embodiments, client 48 finds the affected EvValues 80 by scanning EvValues graph 76, identifying which EvValues are potentially affected by the mutation, marking them as "stale", and checking which of the stale EvValues have indeed changed their values. Upon marking an EvValue as stale, client 48 will also mark as stale any derived EvValue that depends on this EvValue. This process is referred to herein as "change detection" and is described in detail further below.

At a re-validation operation 104, client 48 applies the relevant accessibility tests (as defined in test definitions 56 - Fig. 1) to the identified subset of affected EvValues. At a violation checking operation 108, client 48 checks whether the re-applied tests detected a new accessibility violation.

If a violation is detected, client 48 adds the detected violation to the report being accumulated, at a report updating operation 112. The report may indicate, for example, the type of violation, the severity of the violation, the EvNodes and/or EvValues relating to the violation, the time of occurrence, etc. The method loops back to mutation detection operation 92 above in which client 48 continues to monitor the page for mutations. If no violation is detected, operation 112 is skipped and the method loops back directly to mutation detection operation 92.

The method description illustrated in Fig. 5 is an example method, which is chosen purely for the sake of conceptual clarity. In alternative embodiments, any other suitable method can be used. For example, in some embodiments client 48 exports timeline 52 from processor 24 to a remote processor for analysis. The remote processor may use powerful analysis tools that are beyond the capabilities of processor 24. In some embodiments, client 48 only creates timeline 52 and does not perform any accessibility testing. In these embodiments, accessibility validation is performed solely by the remote processor. In other embodiments, some testing is performed by client 48, and additional testing is performed by the remote processor.

### ADDITIONAL EMBODIMENTS AND VARIATIONS

### Initial scan mode

As explained above, in the first stage of the method of Fig. 5, client 48 performs initial scanning of the page, so as to construct initial versions of EvDOM 68 and EvValues graph 76. In an example embodiment, client 48 may be configured to perform the initial scan in a "compact mode" or in a "verbose mode". In the compact mode, the user specifies the relevant tests, and, in response, client 48 includes in EvValues graph 76 only a minimal set of EvValues 80 that enable performing these tests. In the verbose mode, client 48 includes all possible EvValues 80 in EvValues graph 76. A "custom mode" may also be supported, in which the user can specify which EvValues 80 to collect on some or all EvNodes 72, and also specify the required tests.

Consider, as a demonstrative example, an accessibility test called "Long Alternative Text". This test verifies whether the length of an alternative text, provided as an "alt" attribute of an HTML element, is not too long to be read by a screen reader. Such a test is a good candidate for the "compact mode". The test definition of this test may specify that the test only requires an EvValue called "AltText", which corresponds to the "alt" attribute. The test definition may also specify that the test only considers IMG, INPUT and AREA HTML elements, thereby further reducing the amount of data needed for the test. Based on this definition, for "Long Alternative Text" validation, the initial scan process may collect only "alt" attributes as EvValues, and collect them only from IMG, INPUT and AREA HTML elements.

### Change detection

At operation 100 of Fig. 5, client 48 identifies the subset of EvValues 80 in EvValues graph 76 that has been affected by a mutation. In some embodiments, client 48 first identifies which EvNodes 80 are potentially affected by the mutation and marks them as "stale", and checks which of the stale EvValues have indeed changed their values. Client 48 typically begins with the EvValues that are associated with the EvNode in which the mutation occurred. Client 48 marks these EvValues as stale and checks which of them have actually changed their values due to the mutation. From each EvValue that has changed its value, client 48 traverses EvValues graph 76 to identify EvValues that depend on the EvValue that has changed its value. Client 48 marks these potentially-affected EvValues as stale. The process continues in this manner until all potentially-stale EvValues are identified and checked.

### Include/ignore Sub-trees

To improve performance, in some embodiments client 48 is configured to receive user input, which specifies which subtrees of DOM 60 are needed to be parsed and included in EvDOM 68 and EvValues graph 76. When using this feature, client 48 parses only the specified portion of the DOM and ignores the rest. In some embodiments, client 48 will access certain DOM nodes 64 even though they are not part of the subtrees specified by the user, for example to calculate the TrueOpacity of an EvNode 72.

In some embodiments, the user can also specify subtrees that should be ignored, for example a snippet of a 3^{rd} party code such as Google Maps. In such cases client 48 will act as if these subtrees do not exist in DOM 60.

### Debouncing

In many practical scenarios, a page being monitored issues a large number (e.g., thousands) of mutations in a very short amount of time. One typical example is a JavaScript animation. Unless handled properly, such a scenario would incur a considerable amount of unnecessary computation.

To avoid these undesired scenarios, client 48 may be configured to receive user input that specifies a minimal debounce value denoted N. Given N, client 48 will wait for at least N milliseconds of inactivity before creating the mutations. A maximal debounce value can also be supported.

In many cases, client 48 cannot discard the debounced DOM mutations entirely, but can filter-out many of them. For example, when the same attribute changes multiple times on the same UI component, client 48 may consider only the latest attribute value. As another example, when a UI component is being added and immediately removed, client 48 may omit both mutations (provided there are no references to this UI component).

When reacting to some mutations, it is sometimes more efficient to perform a full re-scan of a subtree (EvNode) on its last state instead of calculating the differences.

Additionally, the debounce behavior can be configured locally, i.e., differently for different parts of the page. For example, instead of waiting for N milliseconds of inactivity globally, client 48 may flush subtrees that have become stable, and/or prevent frequently-changing subtrees from blocking the debounce for the entire page.

### Web components

In some embodiments, accessibility client 48 is capable of handling Web components embedded in Web content. The term "Web component" in this context refers to a family of advanced DOM APIs including, for example, inline frames (iframes), shadow-DOMs, custom elements, templates and slots.

In an example embodiment, client 48 includes the content of an iframe or of a shadow-DOM in a flattened EvDOM. In this manner, the disclosed accessibility testing techniques can be used to cover elements of an iframe or shadow-DOM, as well. The disclosed techniques can be adapted to support any other suitable Web technologies in a similar manner.

In some embodiments, respective instances of client 48 can be injected into an iframe and into the main page. The two instances automatically communicate with each other, e.g., via post messages, resulting in the top instance containing the full structure of the page. Such a mechanism can be applied recursively with any number of iframe children/siblings.

When using a shadow-DOM, EvNodes track their shadow-children, the slots they are assigned to, and other relevant information. Mutations are detected on all shadow-roots, since mutation events will typically not propagate upwards to the root element. EvNodes also typically retain synchronization with slot elements, by observing 'slotchange' events and tracking slot elements and targets being added/removed.

Although the embodiments described herein mainly address accessibility analysis of Web content, the methods and systems described herein can also be used in other applications, such as in security audits, Web page scraping, interactions recordings for monitoring purposes, and many others.

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method for analyzing Web content, the method comprising:
for Web content comprising multiple User Interface (UI) components and associated attributes, constructing an accessibility-related values graph comprising (i) values derived from at least some of the attributes of the UI components, and (ii) interrelations defined between the values; and
performing on-going validation of the Web content, including, in response to detecting a change occurring in the Web content (i) updating the accessibility-related values graph to reflect the change, (ii) identifying a subset of the values of the accessibility-related values graph that have been affected by the change, and (iii) executing, on the subset of values affected by the change, one or more validity tests that validate compliance of the Web content with a defined accessibility specification.

2. The method according to claim 1, and comprising accumulating incremental updates of the accessibility-related values graph in response to changes occurring in the Web content over time, to produce an accessibility timeline data structure.

3. The method according to any of the preceding claims,
wherein producing the accessibility timeline data structure is performed by a first processor;
wherein the method further includes exporting the accessibility timeline data structure from the first processor to a second processor; and
wherein at least some of the validity tests are executed on the accessibility timeline data structure by the second processor.

4. The method according to any of the preceding claims, wherein the Web content is displayed to a user by a software program, and wherein at least part of the on-going validation is performed by an extension of the software program.

5. The method according to any of the preceding claims, wherein at least part of the on-going validation is performed by executable code inserted to the Web content.

6. The method according to any of the preceding claims, wherein identifying the values affected by the change comprises:
marking one or more of the values of the accessibility-related values graph as affected by the change;
progressively traversing at least some of the values of the accessibility-related values graph, starting from the one or more marked values; and
identifying, based on the interrelations defined between the values, additional values among the traversed values affected by the change.

7. The method according to any of the preceding claims, wherein constructing and updating the accessibility-related values graph are performed by accessing one or more object models representing the Web content.

8. A system for analyzing Web content, the system comprising:
a memory, configured to store the Web content; and
one or more processors, configured to:
for Web content comprising multiple User Interface (UI) components and associated attributes, construct an accessibility-related values graph comprising (i) values derived from at least some of the attributes of the UI components, and (ii) interrelations defined between the values; and
perform on-going validation of the Web content, including, in response to detecting a change occurring in the Web content (i) updating the accessibility-related values graph to reflect the change, (ii) identifying a subset of the values of the accessibility-related values graph that have been affected by the change, and (iii) executing, on the subset of values affected by the change, one or more validity tests that validate compliance of the Web content with a defined accessibility specification.

9. The system according to claim 8, wherein the one or more processors are configured to accumulate incremental updates of the accessibility-related values graph in response to changes occurring in the Web content over time, so as to produce an accessibility timeline data structure.

10. The system according to any of the preceding claims,
wherein the one or more processors comprise a first processor and a second processor;
wherein the first processor is configured to produce the accessibility timeline data structure and to export the accessibility timeline data structure to the second processor; and
wherein the second processor is configured to execute at least some of the validity tests on the accessibility timeline data structure.

11. The system according to any of the preceding claims, wherein the Web content is displayed to a user by a software program, and wherein at least part of the on-going validation is performed by an extension of the software program.

12. The system according to any of the preceding claims, wherein at least part of the on-going validation is performed by executable code inserted to the Web content.

13. The system according to any of the preceding claims, wherein the one or more processors are configured to identify the values affected by the change, by:
marking one or more of the values of the accessibility-related values graph as affected by the change;
progressively traversing at least some of the values of the accessibility-related values graph, starting from the one or more marked values; and
identifying, based on the interrelations defined between the values, additional values among the traversed values affected by the change.

14. The system according to any of the preceding claims, wherein the one or more processors are configured to construct and update the accessibility-related values graph by accessing one or more object models representing the Web content.
